# EUROPÄISCHE PATENTANMELDUNG

(11) **EP 2 028 169 A1**
(43) Veröffentlichungstag der Anmeldung: **25.02.2009**
(21) Anmeldenummer: 08014875.2
(22) Anmeldetag: 21.08.2008
(51) Int. Cl.: C03C 23/00, B08B 3/12, A47L 15/13, C12G 1/00

(54) **Behandlungsverfahren für Glas und damit behandelte Gläser**

(30) Priorität: 22.08.2007 DE 102007039729
(71) Anmelder: Latzel, Klaus, 81825 München (DE); Latzel, Gert, 85521 Riemerling (DE)
(72) Erfinder: Latzel, Gert, 85521 Riemerling (DE)

(57) **Zusammenfassung**

Die Erfindung betrifft ein spezielles Behandlungsverfahren für Glas unter Verwendung einer Ultraschallbehandlung des in ein wässeriges Medium eingetauchten Glasbereiches sowie ein mit diesem Verfahren behandeltes Trinkglas und dessen Verwendung für die Weinverkostung.

## Beschreibung

Die Erfindung betrifft ein Behandlungsverfahren für Glas sowie damit behandelte Gläser, insbesondere Trinkgläser. Bei dem erfindungsgemäßen Behandlungsverfahren wird die behandelte Glasoberfläche in ihrer Mikrostruktur derart verändert, dass die Glasoberfläche eine gleichmäßige Mikrostruktur aufweist.

Üblicherweise werden bei Weinverkostungen herkömmliche Trinkgläser verwendet. Dabei ist eine bestimmte Art und Weise der Weinaufbereitung während der Verkostung erforderlich. So erfordern gerade hochwertigere, lang lagerbare Weine eine besondere Behandlung nach dem Öffnen der Flasche, das sogenannte "Atmen" des Weines. Hierbei wird der Wein mittels verschiedenartiger Dekantiervorrichtungen in bestimmten Zeitintervallen vor der Verkostung dekantiert, d.h. an Luft umgegossen. Dieser Schritt des Dekantierens bewirkt eine verbesserte Sauerstoffzufuhr zum Wein. Als Folge der verbesserten Atmung des Weines kommt es zu einer Verbesserung des Bouquets, zu einer Intensivierung der im Wein enthaltenen Aromen und zu einem verbesserten Abgang usw.

Spezielle Gläser für eine schnellere Entwicklung des Bouquets und der Aromen von Weinen bei Weinverkostungen bereitzustellen wurden in der Glashütte Valentin Eisch GmbH durchgeführt. Durch ein sogenanntes "Oxygenierungs-Verfahren" von speziell abgestimmten Gläsern, wurde eine Verkürzung der vollen Entwicklung von Bouquet und Aromen bei der Weinaufbereitung ermöglicht. Diese auch als atmende Gläser (Breathable Glass^{™}) bekannten Gläser werden aus einem speziell zusammengesetzten Rohstoffmix in bleifreier Kristallglas-Qualität mittels eines speziellen, nicht näher bekannten "Oxygenierungs-Verfahren" hergestellt.

Hinweise zur dahinterstehenden Behandlungsmethode sowie der damit verbundenen Effekte sind weder vom Hersteller selbst veröffentlicht noch konnten Hinweise von den erworbenen Produkten selbst erhalten werden. Der Firmenschrift ist zu entnehmen, dass eine "Oxygenierungsbehandlung" stattfindet, die scheinbar das Atmen des Weines beschleunigt.

Im allgemeinen Sprachgebrauch werden Reinigungsverfahren oft auch als Behandlungsverfahren bezeichnet. Bei Reinigungsverfahren werden jedoch lediglich an Glasoberflächen anhaftende Schmutzpartikel oder Fremdpartikel abgelöst, aber es sollte keine Veränderung der Glasoberfläche stattfinden. Aus dem Stand der Technik (z.B. WO 93/06947 A und JP 2004147699 A) sind Ultraschallreinigungsverfahren bekannt, bei denen durch Erzeugung von Kavitationsblasen Verschmutzungen auf Geschirr bzw. Gläsern leichter abgelöst werden. Diese Reinigungsverfahren führen unter anderem zu einer starken Verkürzung der Reinigungszeit, da die Kavitationsblasen zu einer mechanischen Ablösung der Verschmutzungen führen. Vorversuche zu dieser Erfindung haben gezeigt, dass Reinigungsverfahren mit verschmutzten Gläsern bzw. mit handelsüblichen Glasreinigungsmitteln in vorgeschlagenen Konzentrationen nicht zu einer signifikanten Veränderung der Glasoberfläche führen. Es konnte insbesondere bei der Bouquetentwicklung von Weinen keine Verbesserung gegenüber neuwertigen Gläsern festgestellt werden.

Ausgangspunkt dieser Erfindung war, eine Alternative zu den vorstehend erwähnten "atmenden Gläsern" wie sie von der Firma Eisch vertrieben werden sowie ein einfaches Herstellungsverfahren für Gläser mit verbesserter Bouquetentwicklung von Weinen zu finden. Hierbei stand eine einfache Durchführbarkeit des Verfahrens im Vordergrund. Außerdem sollte das Verfahren mit hinreichender Reproduzierbarkeit auch auf andere Gläser als Weingläser wie z.B. Sherry-, Cognac- oder Whiskygläser übertragbar sein.

Der erste Gesichtspunkt der Erfindung ist ein Behandlungsverfahren für ein Glas, das die vorstehenden Aufgaben löst. Es umfasst die folgenden Schritte:
i) Eintauchen wenigstens des zu behandelnden Glasbereiches in ein wässeriges Medium,
ii) Ultraschallbehandlung der mit dem Medium benetzten Glasoberfläche,
iii) Herausnehmen des Glases und
iv) optional Spülen des Glases mit klarem Wasser.

Gemäß einer bevorzugten Ausführungsform des ersten Aspektes der Erfindung wird ein Behandlungsverfahren bereitgestellt, bei dem das Glas eine Karaffe oder ein Trinkglas, insbesondere ein Wein-, Sherry-, Cognac- oder Whiskyglas, sein kann.

Bevorzugt eingestellte Bedingungen in dem Behandlungsverfahren gemäß dem ersten Aspekt sind, dass die Ultraschallbehandlung bei bevorzugt 30 bis 45 kHz, insbesondere bei 30 bis 40 kHz, über einen Zeitraum von ca. 2 bis 20 Minuten durchgeführt wird und, gleichzeitig oder alternativ, bei der Ultraschallbehandlung das wässerige Medium einen pH-Wert von ca. 5 bis 8 aufweist. Weiter bevorzugt kann in dem erfindungsgemäßen Behandlungsverfahren die Temperatur des eingesetzten wässerigen Mediums bei der Ultraschallbehandlung auf über 40 °C eingestellt sein.

Bei einer weiteren bevorzugten Ausführungsform des Behandlungsverfahrens gemäß einem der vorhergehenden Aspekte kann das wässerige Medium ein oder mehrere Additive, ausgewählt aus Reinigungsmitteln, Benetzungsmitteln, Tensiden, oberflächenaktiven Substanzen, Alkoholen und Aminen, umfassen, wobei besonders bevorzugt Benetzungsmittel auf Tensidbasis (z.B. ionische oder anionische Tenside) oder Alkoholbasis wie z.B. Isopropanol, Butanol oder Glykol eingesetzt werden, da sie einen gleichmäßigen Zugriff des wässerigen Mediums auf die Glasoberfläche bewirken.

Die eingesetzten Benetzungsmittel sollten einen möglichst hohen Siedepunkt haben, damit möglichst wenig Kavitationsblasen durch Dampfkavitation, d.h. durch Sieden und Ausdampfen des Benetzungsmittels bei Ultraschallbehandlung, erzeugt werden. Ein Sieden der Additive sollte möglichst vermieden werden, da die lokale Kavitationsblasenbildung, die z.B. bei Ultraschallreinigungsverfahren zur Ablösung der Verschmutzungen von der Glasoberfläche gezielt ausgenutzt wird, den erfindungsgemäßen Effekt verringert bzw. ganz verhindert. Deshalb dürfen Additive nicht in hohen Konzentrationen im wässerigen Medium vorhanden sein. Übliche Konzentrationen von handelsüblichen Reinigungsmitteln für Ultraschallbäder, die hauptsächlich aus anionischen und nichtionischen Tensiden bestehen, liegen für Reinigungsanwendungen im Bereich von 2-5 Volumenprozent Reinigungskonzentrat (bei ca. 30 Massenprozenten Tensidbestandteilen im Konzentrat), um einen Reinigungseffekt erzielen zu können. Es hat sich aber gezeigt, dass eine solche Reinigungsbehandlung eines leicht- bis mittelgradig verschmutzten Glases nicht zu einer erfindungsgemäßen Oberflächenbehandlung des Glases führt. Vermutlich sind lokale Kavitationseffekte an der Glasoberfläche, wie sie in den Reinigungsverfahren des Standes der Technik als für den Reinigungseffekt für notwendig beschrieben sind, und lokal wirkende Interaktionen der abgelösten Verschmutzungen mit der Glasoberfläche mit dafür verantwortlich.

Deshalb wird erfindungsgemäß die Konzentration der Benetzungsmittel und Additive so eingestellt, dass keine wesentliche Dampfkavitation auftritt. Bevorzugt werden keine Additive außer Benetzungsmitteln eingesetzt, um größere Kavitationsblasen möglichst auszuschließen. Erfindungsgemäß bevorzugte Konzentrationsbereiche für das Benetzungsmittel, insbesondere bei Tensiden, liegen bei 0,01 bis 0,2 Volumenprozent, bevorzugt bei 0,02 bis 0,1, noch bevorzugter bei nicht mehr als 0,07 Volumenprozent. Alkoholische Benetzungsmittel wie z.B. Isopropanol können mit einer Konzentration von bis zu 5 Volumenprozent eingesetzt werden, wobei bevorzugt geringere Konzentrationen von max. 1 Volumenprozent oder darunter verwendet werden, da der Benetzungseffekt schon ausreichend ist und weniger Kavitationsblasen erzeugt werden.

Weitere bevorzugte Gesichtspunkte des Behandlungsverfahrens gemäß einem der vorhergehenden Aspekte sind, dass das Glas zumindest während der Ultraschallbehandlung in regelmäßigen Abständen oder kontinuierlich gedreht werden kann, um eine möglichst gleichmäßige Behandlung der benetzten Oberfläche zu gewährleisten. Bevorzugt sollte dabei die gesamte Innenseite des Glases während der Ultraschallbehandlung mit dem wässerigen Medium benetzt sein. Eine verbesserte Benetzung der zu behandelnden Oberfläche kann auch dadurch erzielt werden, dass die sich beim Eintauchen des Glases in das wässerige Medium gebildeten Luftblasen vor oder während der Ultraschallbehandlung durch Schwenkbewegungen des Glases oder manuell durch Abstreifervorrichtungen, insbesondere in Bürstenform, entfernt werden. Aber auch die vorstehenden Benetzungsmittel wie Isopropanol oder Tenside fördern die gleichmäßige Benetzung der Glasoberflächen mit dem wässerigen Behandlungsmedium, um eine gleichmäßige Oberflächenveränderung des Glases bei der Behandlung zu bewirken. Insbesonders effektiv haben sich neutrale bis schwach saure Benetzungsmittel mit einem pH-Wert zwischen 6 und 7 herausgestellt, wobei basische Mittel, die in handelsüblichen Reinigungsmitteln eingesetzt werden, nicht zu der gewünschten Oberflächenbehandlung führten.

Ein weiterer Gesichtspunkt der Erfindung betrifft ein Trinkglas, das nach einem erfindungsgemäßen Behandlungsverfahren gemäß einem der vorhergehenden Aspekte erhältlich ist. Die so hergestellten, erfindungsgemäßen Trinkgläser eignen sich zum Beispiel sehr gut für die Verwendung in der Wein-, Sherry-, Cognac- bzw. Whiskyverkostung, da die behandelte Oberfläche eine veränderte Mikrostruktur aufweist, die das Atmen des Weines, des Sherrys oder des Whiskys fördert, so dass das aufwändige Dekantieren des Weines vor der Verkostung verkürzt oder gar weggelassen werden kann

Ein weiterer Gesichtspunkt der Erfindung ist die Verwendung des erfindungsgemäßen Behandlungsverfahrens nach einem der vorhergehenden Gesichtspunkte für die Herstellung von Trinkgläsern, insbesondere bevorzugt für die Herstellung von Wein-, Sherry- oder Whiskygläsern.

Das erfindungsgemäße Behandlungsverfahren für Gläser ist insbesondere für die Veredelung von Trinkgläsern wie etwa Wasser oder Weingläsern oder für Gefäße wie z.B. Karaffen für Wein geeignet. Bei diesem Verfahren wird ein handelsübliches Trinkglas in einem mit einem wässerigen Medium gefüllten Ultraschallbad, bevorzugt bei einer Frequenz von ca. 30 bis 45 kHz, insbesondere bei 30 bis 40 kHz, behandelt. Das wässerige Medium kann eine neutrale oder leicht saure Behandlungsflüssigkeit auf Wasserbasis sein. Beispiele für die einsetzbare Behandlungsflüssigkeit sind handelsübliche Reinigungsflüssigkeiten für Ultraschallbäder, die jedoch in einer geringeren Konzentration als angegeben eingesetzt werden sollten. Der pH-Wert ist geeigneterweise im Bereich von etwa 5 bis 8, bevorzugter von etwa 5 bis 7, besonders bevorzugt im neutralen Bereich um einen pH-Wert von ca. 7 eingestellt. Ein höherer pH-Wert liefert nicht den erwarteten Erfolg. So werden zum Beispiel die nachstehend aufgeführten Effekte, z.B. verbessertes Aroma, längeranhaltende Spritzigkeit, usw., nicht in dem Maße wie unterhalb von pH 8 erhalten. Bevorzugt wird im neutralen Bereich wie zwischen pH 6 und 7 gearbeitet, da die Glasoberfläche nicht chemisch angegriffen wird bzw. nicht angeätzt wird. Im Gegensatz dazu wird bei dem erfindungsgemäßen Behandlungsverfahren die Mikrostruktur der Oberfläche möglichst gleichmäßig verändert, so dass z.B. die Aufschließungszeit verkürzt bzw. die Aromaentwicklung von Weinen begünstigt wird. Es wird angenommen, dass die Ultraschallbehandlung die Oberfläche des Glases derart verändert bzw. aktiviert, dass vermutlich an der Glasoberfläche adsorbierter Sauerstoff gleichmäßiger an den Wein abgegeben werden kann, so dass sich das Aroma schneller als in unbehandelten Gläsern entfalten kann.

Bei dem erfindungsgemäßen Behandlungsverfahren findet eine Veränderung der behandelten, d.h. der mit der Behandlungsflüssigkeit benetzten Oberfläche, statt. Die Behandlungsdauer sollte mindestens 2 Minuten, bevorzugt mindestens 5 bzw. 8 Minuten betragen, damit die Oberfläche erfindungsgemäß verändert werden kann. Übliche Behandlungszeiten werden zwischen 5 und 20 Minuten, bevorzugter zwischen 8 und 20 Minuten und bei sehr geringen Benetzungsmittelkonzentrationen weiter bevorzugt zwischen 15 und 20 Minuten eingestellt. Eine kürzere Behandlungszeit von unter 1-2 Minuten, wie sie gewöhnlicherweise für Reinigungsverfahren eingesetzt wird, liefert nicht den gewünschten Effekt, da eine gleichmäßige Veränderung bzw. Aktivierung der Mikrostruktur der Glasoberfläche nicht erzielt werden kann. Es wird vermutet, dass die Veränderungen auf atomarer Ebene stattfinden.

Trinkgläser bzw. Karaffen aus Glas werden zweckmäßigerweise mit dem Kelch oder im Gesamten in die Behandlungsflüssigkeit eingetaucht, so dass zumindest die Innenfläche, d.h. die mit dem Getränk in Kontakt kommende Oberfläche, des Glases bzw. der Karaffe vollständig mit der Behandlungsflüssigkeit benetzt ist.

Im Folgenden wird das Behandlungsverfahren für Gläser näher erläutert. Dies kann aber analog auch für Karaffen oder andere Gefäße aus Glas angewendet werden, wobei die gleichen vorteilhaften Effekte erzielt werden.

Zur Verbesserung der Benetzung kann optional das Glas vor oder während der Behandlung in der Behandlungsflüssigkeit geschwenkt werden, so dass die an der Glaswand anhaftenden Luftblasen sich ablösen. Die Luftblasen können auch durch eine Abstreifvorrichtung wie etwa eine Bürste, von der Glaswand abgelöst werden, um dadurch die benetzte Glasfläche zu vergrößern. Bevorzugt wird in das wässerige Medium noch eine geringe Menge an Benetzungsmitteln, wie sie vorstehend erläutert wurden, hinzugegeben, um die gleichmäßige Benetzung noch zu fördern.

Das Verfahren kann, falls notwendig, auch nach mehrmaligem Gebrauch, bei täglichem Gebrauch der Gläser z.B. in regelmäßigen Abständen von 1 bis 2 Jahren, wiederholt werden, um die Aktivierung der Glasoberfläche aufzufrischen. Hierbei ist zu betonen, dass auch eine anschließende Spülmaschinenreinigung auf den erzielten Oberflächeneffekt normalerweise keinen Einfluss hat.

Die durch die Ultraschallbehandlung erzielte Veränderung der Oberfläche ist nicht mit bloßem Auge erkennbar, kann aber zum Beispiel deutlich am Geschmack oder am Aroma des darin enthaltenden Getränkes festgestellt werden. So schmeckt Mineralwasser mit Kohlensäure aus erfindungsgemäß behandelten Gläsern nach kurzer Zeit zum Beispiel voller, frischer und/oder prickelnder. Dieser Effekt hält auch länger an, so dass das Getränk in mit dem erfindungsgemäßen Behandlungsverfahren behandelten Gläsern über längere Zeit frischer und schmackhafter bleibt, als in unbehandelten Gläsern. Außerdem kann man diesen Unterschied auch am unterschiedlichen Sprudelverhalten von kohlensäurehaltigem Mineralwasser erkennen. Bei erfindungsgemäß behandelten Gläsern sprudelt das Wasser mit ruhigeren, kleineren Blasen. Im Gegensatz dazu sprudelt das Mineralwasser in unbehandelten Gläsern von Anfang an heftiger, hört aber eher auf zu sprudeln.

Außerdem kann bei gekühlten Flüssigkeiten (Getränken) ein Unterschied zwischen behandelten und unbehandelten Gläsern auch an der gleichförmigeren Erwärmung der Glasoberfläche und der sich darin befindlichen Flüssigkeit festgestellt werden. Insbesondere scheint die Oberflächentemperatur des behandelten Glases gleichmäßiger zu sein, da in der Regel auf der Außenfläche des mit einer kalten Flüssigkeit gefüllten, erfindungsgemäß behandelten Glases das Wasser gleichmäßig in kleinen Tröpfchen kondensiert. Im Gegensatz dazu perlt das kondensierte Wasser bei unbehandelten Gläsern in größeren Tropfen an der Außenfläche des Glases ab.

Ein überraschend starker Effekt kann bei Weinen festgestellt werden. Insbesondere Rotwein reift in erfindungsgemäß behandelten Gläsern wesentlich schneller. Der Wein entfaltet zum Beispiel schneller ein besseres Bouquet und ein intensiveres Aroma, und bekommt einen runderen, angenehmeren Geschmack als in unbehandelten Gläsern. Ebenso kann man beim Trinken von Weinen aus erfindungsgemäß hergestellten Gläsern einen verbesserten Abgang bemerken. Diese vorteilhaften Effekte beruhen vermutlich auf einer durch die Ultraschallbehandlung erzielten, bleibenden Oberflächenveränderung. Vermutlich wird die Mikrostruktur des Glases sehr gleichmäßig ausgebildet, d.h. Kantendefekte und Unregelmäßigkeiten der Glasoberfläche werden auf atomarer Ebene abgebaut.

Überraschend ist, dass bei zahlreichen Tests bei allen Wein- oder Whiskysorten ein Unterschied festgestellt werden konnte. Bei den meisten Weinsorten kam es zu den vorstehend beschriebenen vorteilhaften Aromen- und Geschmacksentfaltungen. Es gab aber auch ein paar wenige Weinsorten, bei denen die Aroma- bzw. Geschmacksentfaltung von den Testpersonen nicht positiv aufgenommen wurde. Bei diesen Weinsorten war zwar auch ein deutlicher Unterschied im Geschmack und Aroma zwischen behandelten und unbehandelten Gläsern feststellbar, er wurde aber als nicht günstig begutachtet. Im Allgemeinen kann aber gerade aus diesen Tests mit verschiedenen Weinsorten gefolgert werden, dass eine signifikante und dauerhafte Veränderung der Glasoberfläche durch das erfindungsgemäße Behandlungsverfahren erzielt wird. Die behandelten Gläser können schon alleine auf Grund der erzielten Aromen- bzw. Geschmacksunterschiede zu herkömmlichen, unbehandelten Gläsern erkannt werden.

Im Folgenden wird die Erfindung durch Beispiele erläutert, wobei diese nicht dazu dienen, die Erfindung darauf zu beschränken. Die Beispiele dienen insbesondere dazu, einzelne durch gewisse Merkmalskombinationen und Parametereinstellungen erzielte Effekte zu veranschaulichen. Hier sind jedoch nur Tendenzen veranschaulicht, die auch mit anderen für den Fachmann erkenntlichen Kombinationen gelten.

### Beispiel 1

Ein Ultraschallbad, Marke Elma T460/H (Fa. Elma aus Singen), mit einer HF-Frequenz von 35 kHz für den Heimgebrauch wurde mit warmen Wasser, ca. 50 °C, gefüllt und mit 0,19 Vol.-% eines pH-neutralen Reinigungsmittels für Ultraschallbäder (Elma N10; Fa.Elma; Tensidgehalt ca. 33 Masse-%) versetzt. Die Temperatur der Behandlungsflüssigkeit wurde während der gesamten Messung in etwa gleichgehalten.

6 Gläser (Marke Vina von der Firma Schott) wurden jeweils in die Behandlungsflüssigkeit eingetaucht, so dass der gesamte Kelch mit Wasser gefüllt war. Die Luftblasen wurden durch mehrmalige Drehung der Gläser von Hand entfernt.

Die Ultraschallbehandlung wurde jeweils für ca. 6 Minuten durchgeführt. Die Gläser wurden herausgenommen und mehrmals mit klarem Wasser abgespült.

Diese Gläser wurden von 4 Sommeliers mit 6 herkömmlichen Gläsern in Blindversuchen bezüglich des Geschmacks, der Aroma- und Bouquetentfaltung und des Abgangs des Weins getestet. Hierbei wurden mehrere Weinsorten jeweils gleich nach dem Einschenken und nach 5 Minuten "Atmen" des Weines bewertet.

Bei allen Weinsorten wurde eine schnellere Reifung des Weines beobachtet. Die Aromaentfaltung nach 5 Minuten war bei ca. 75 % der Weinsorten verbessert. Ebenso war bei diesen der Geschmack runder und angenehmer. Bei ca. 25 % der Weinsorten wurden das sich nach 5 Minuten entfaltende Aroma bzw. der Geschmack als schlechter empfunden.

Vergleichsbeispiel 1

Der gleiche Testaufbau wie im Beispiel 1 wurde verwendet, außer dass anstelle des pH-neutralen Reinigungsmittels ein alkalisches Reinigungsmittel für Ultraschalbäder eingesetzt wurde.

Die Gläser konnten bei den Aroma- bzw. Geschmackstests nicht von unbehandelten Gläsern unterschieden werden.

### Vergleichsbeispiel 2

Der gleiche Testaufbau wie in Beispiel 1 wurde verwendet, außer dass mit Weinstein- bzw. Ölresten verschmutzte Gläser mit einem neutralen Reinigungsmittel (Elma N10; Fa.Elma) mit einer für die Reinigung in Ultraschallbädern üblichen Minimalkonzentration von 2 Volumen-% gereinigt wurden. Die Verunreinigungen lösten sich sehr schnell (unter 30 Sekunden) von der Glasoberfläche. Trotzdem wurde über einen längeren Zeitraum von 6 Minuten weitergereinigt, obwohl keine weiteren Reinigungseffekte erzielt wurden. Es wurde beobachtet, dass die in der Lösung umher schwimmenden Verunreinigungen insbesondere an den zu behandelnden Oberfläche umher tanzten.

Es kam entgegen der Vermutung, dass ebenso die Glasoberfläche bei diesen Reinigungsversuchen verändert werden müsste, überraschend zu keiner Verbesserung des Bouquets und des Aromas von Weinen. Auch bei Mineralwässern wurden nicht die erfindungsgemäßen Effekte erzielt.

Vermutet wird, dass die Verschmutzungen im Wasser und die hohe Konzentration des Reinigungsmittels zu starken lokalen Kavitationen an der Glasoberfläche führen, so dass keine gleichmäßige Mikrostrukturveränderung der behandelten Oberfläche mehr möglich war. Wahrscheinlich werden entgegen dem efindungsgemäßen Verfahren die Oberflächen durch lokale Kavitationen unterschiedlich stark angegriffen, so dass sich Fehlstellen in der Mikrostruktur der Glasoberfläche bilden bzw. verstärken und somit einer regelmäßigen Ausbildung einer Mikrostruktur entgegengewirkt wird.

### Beispiel 2

Das gleiche Behandlungsverfahren wie im Beispiel 1 wurde nunmehr für Wassergläser verwendet. Die erfindungsgemäßen, behandelten Gläser wurden mit unbehandelten Gläsern bezüglich der Frische von kaltem kohlensäurehaltigem Mineralwasser verglichen.

Die im Wasser enthaltene Kohlensäure perlte in den erfindungsgemäßen Gläsern langsamer, in kleineren Blasen, während in den unbehandelten Gläsern schon nach 18 Minuten keine Perlenbildung mehr zu sehen war. Ferner war das Wasser in den behandelten Gläsern von Beginn an bis über 19 Minuten nach dem Eingießen voll im Geschmack und prickelte auch nach 19 Minuten noch. Im Gegensatz dazu schmeckte in den unbehandelten Gläsern das Wasser nach kurzer Zeit an leerer und schaler. Insgesamt wurden bei diesem Test die erfindungsgemäßen, behandelten Gläser als gegenüber den unbehandelten Gläsern verbessert im Geschmack bewertet.

## Patentansprüche

1. Behandlungsverfahren für Glas, das die folgenden Schritte umfasst:
i) Eintauchen des zu behandelnden Glasbereiches in ein wässeriges Medium,
ii) Ultraschallbehandlung der mit dem Medium benetzten Glasoberfläche,
iii) Herausnehmen des Glases und
iv) optional Spülen des Glases mit klarem Wasser.

2. Behandlungsverfahren gemäß Anspruch 1, wobei das Glas eine Karaffe oder ein Trinkglas, insbesondere ein Wein-, Sherry-, Cognac- oder Whiskyglas, ist.

3. Behandlungsverfahren gemäß Anspruch 1 oder 2, wobei die Ultraschallbehandlung der Glasoberfläche über einen Zeitraum von ca. 2 bis 20 Minuten durchgeführt wird.

4. Behandlungsverfahren gemäß einem der vorhergehenden Ansprüche, wobei das wässerige Medium bei der Ultraschallbehandlung einen pH-Wert von ca. 5 bis 8 aufweist.

5. Behandlungsverfahren gemäß einem der vorhergehenden Ansprüche, wobei das wässerige Medium ein oder mehrere Additive umfasst, ausgewählt aus Benetzungsmitteln, Tensiden, oberflächenaktiven Substanzen und Alkoholen.

6. Behandlungsverfahren gemäß einem der vorhergehenden Ansprüche, wobei die Temperatur des wässerigen Mediums bei der Ultraschallbehandlung über 40 °C liegt.

7. Behandlungsverfahren gemäß einem der vorhergehenden Ansprüche, wobei das Glas zumindest während der Ultraschallbehandlung in regelmäßigen Abständen oder kontinuierlich gedreht wird.

8. Behandlungsverfahren nach Anspruch 2, wobei die gesamte Innenseite des Glases während der Ultraschallbehandlung mit dem wässerigen Medium benetzt ist.

9. Behandlungsverfahren gemäß Anspruch 8, wobei die sich beim Eintauchen des Glases in das wässerige Medium gebildeten Luftblasen durch Schwenkbewegungen des Glases oder manuell durch Abstreifervorrichtungen, insbesondere in Bürstenform, entfernt werden.

10. Trinkglas erhältlich nach einem Behandlungsverfahren gemäß einem der Ansprüche 1 bis 9.

11. Trinkglas nach Anspruch 10, wobei die behandelte Glasoberfläche eine gleichmäßige Mikrostruktur aufweist.

12. Trinkglas nach Anspruch 10 oder 11 für die Verwendung zur Wein-, Sherry-, Cognac-oder Whiskyverkostung.

13. Verwendung des Behandlungsverfahrens nach einem der Ansprüche 1 bis 9 für die Herstellung von Trinkgläsern, insbesondere Wein-, Sherry-, Cognac- oder Whiskygläsern.
